# EUROPEAN PATENT SPECIFICATION

(11) **EP 3 050 788 B1**
(45) Date of publication and mention of the grant of the patent: **02.05.2018**
(21) Application number: 15152808.0
(22) Date of filing: 28.01.2015
(51) Int. Cl.: B62K 21/12, B62K 19/30, B62J 99/00

(54) **Handlebar stem with display unit**
Lenkervorbau mit Anzeigeeinheit
Potence de guidon avec unité d'affichage

(43) Date of publication of application: 03.08.2016
(73) Proprietor: Chen-Lee, Jennifer, Taichung City 40869 (TW)
(72) Inventor: Chen, Chao-Hu, Taichung City 40869 (TW)
(74) Representative: Cabinet Chaillot

(56) References cited:
- DE-U1- 9 204 615
- FR-A1- 2 506 250
- FR-A1- 2 654 698
- US-A1- 2011 162 929

## Description

### BACKGROUND OF THE INVENTION

### 1. Fields of the invention

The present invention relates to a handlebar stem, and more particularly, to a bicycle handlebar stem having a receiving space in which a display unit is received.

### 2. Descriptions of Related Art

The conventional way to install an accessory such as a display unit, a speed meter, a timer or the like to a bicycle handlebar is directly secure the accessories to the handlebar bar by a fastening member. However, multiple accessories protrude from the handlebar make the handlebar to be messy. Another conventional way is to install a transverse tube to the handlebar, and a locking unit is located on the transverse tube. The locking unit includes two ribs and a rod is connected to the two ribs, a fastening member is connected to the rod. The display unit is connected to a slide ton he fastening member such that the display unit is secured to the fastening member. The rider's view and the display unit are located on a straight line, the rider does not need to rotate his/her head to check the information in the display unit.

Nevertheless, the transverse tube, the locking unit, the two ribs, the rod and the fastening member make the whole structure be complicated and heavy.

DE-U-92 04 615 discloses a bicycle handlebar stem according to the preamble of claim 1, which comprises a hollow tube with a slot defined therein, and having a reinforcement portion. A receiving space is defined between the hollow tube and the reinforcement portion. A display unit is located in the receiving space and has at least one Liquid Crystal Display screen, an operation button and an enter button. The display unit has a room to receive a power source therein, and protrudes beyond the outer surface of the hollow tube.

FR-A-2 506 250 discloses a bicycle handlebar stem which comprises a hollow tube and an electronic unit is received in the hollow tube. A power source is received in a room in the electronic unit to provide power to the electronic unit.

The present invention intends to provide a bicycle handlebar stem which has a receiving space to receive a display unit therein so that the shortcomings mentioned above are eliminated.

### SUMMARY OF THE INVENTION

The present invention relates to a bicycle handlebar stem which is connected between the handlebar and the steering tube. The handlebar stem comprises a hollow tube having a slot defined therein, and the hollow tube has a reinforcement portion. A receiving space is defined between the reinforcement portion and the hollow tube. A display unit is located in the receiving space and has at least one Liquid Crystal Display screen, an operation button and an enter button. The display unit has a room to receive a power source therein. The display unit protrudes beyond the outer surface of the hollow tube.

The reinforcement portion includes a solid reinforcement member which is located transversely in the slot and connected between two insides of slot, or the reinforcement portion includes a solid reinforcement member which is located in the slot and integrally extends along two insides of the hollow tube.

Preferably, the reinforcement portion includes a solid reinforcement member whose hardness is harder than that of the hollow tube.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the handlebar stem of the present invention;
Fig. 2 is a perspective view to show the handlebar stem of the present invention;
Fig. 3 is an end cross sectional view of the first embodiment of the handlebar stem of the present invention;
Fig. 4 is another end cross sectional view of the first embodiment of the handlebar stem of the present invention;
Fig. 5 is an end cross sectional view of the second embodiment of the handlebar stem of the present invention;
Fig. 6 is another end cross sectional view of the second embodiment of the handlebar stem of the present invention;
Fig. 7 is an end cross sectional view of the third embodiment of the handlebar stem of the present invention, and
Fig. 8 is another end cross sectional view of the third embodiment of the handlebar stem of the present invention.

### DETAILED DESCRIPTION OF THE PREFERRED EMBODIMENT

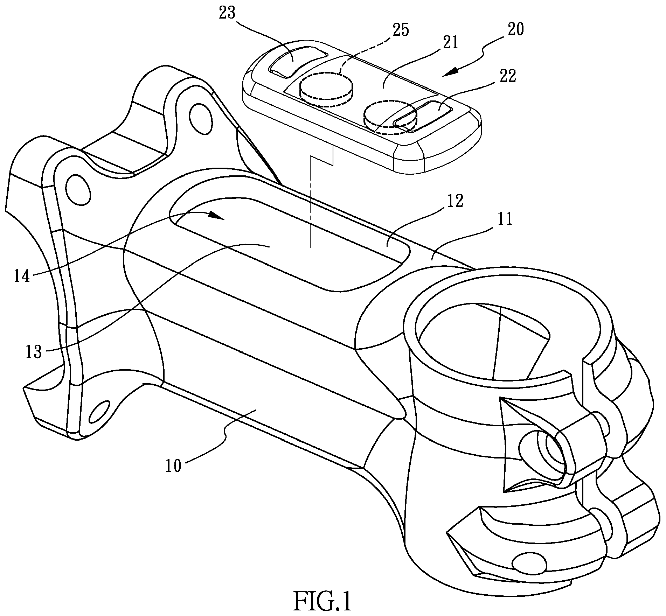

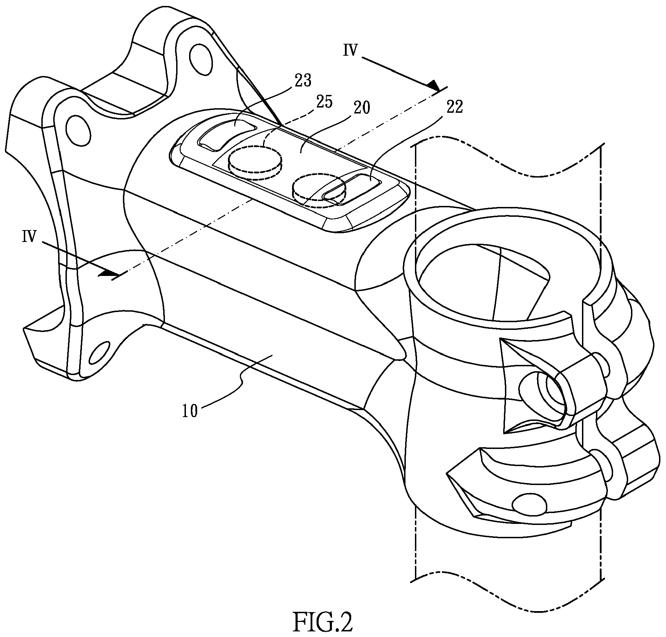

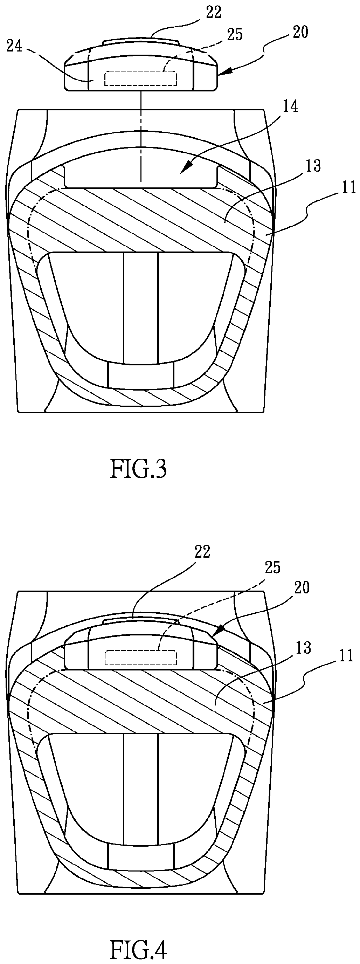

Referring to Figs. 1 to 2, the handlebar stem 10 of the present invention comprises a hollow tube 11 which is connected between the handlebar and the steering tube (not shown). The hollow tube 11 has a slot 12 defined therein, and the hollow tube 11 has a reinforcement portion 30 so as to reinforce the strength of the hollow tube 11 and the slot 12. As shown in Fig. 3, the reinforcement portion 30 includes a solid reinforcement member 13 which is located transversely in the slot 12 and integrally connected between two insides of the hollow tube 11. A receiving space 14 is defined between the reinforcement member 13 of the reinforcement portion 30 and the hollow tube 11.

A display unit 20 is located in the receiving space 14 and has at least one Liquid Crystal Display screen 21, an operation button 22 and an enter button 23. The display unit 20 has a room 24 to receive a power source 25 therein. The display unit 20 protrudes beyond the outer surface of the hollow tube 11, so that the display unit 20 can be easily removed from the slot 12 when needed.

As shown in Fig. 4, when the display unit 20 is located in the slot 12, the rider can operate the operation button 22 and the enter button 23 according to the information displayed in the at least one Liquid Crystal Display screen 21.

Thanks to the solid reinforcement member 13 which reinforces the structural strength of the slot 12 and the hollow tube 11 to avoid the hollow tube 11 from being broken.

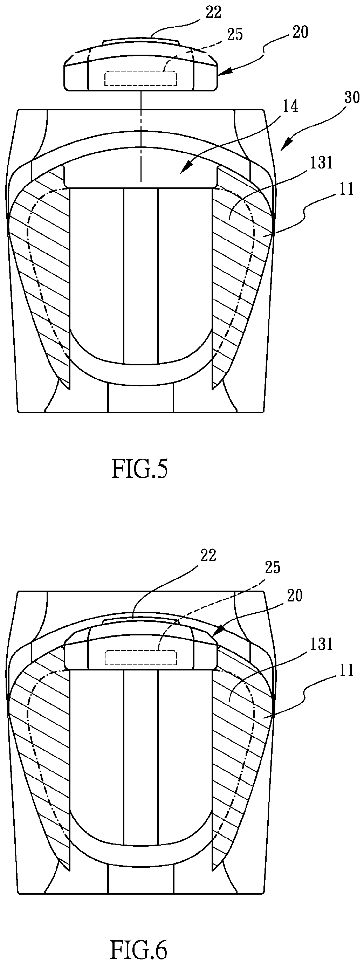

As shown the second embodiment in Figs. 5 and 6, the reinforcement portion 30 includes a solid reinforcement member 131 which is located in the slot 12 and extends along the two insides of the hollow tube 11. The receiving space 14 between the reinforcement member 131 of the reinforcement portion 30 and the wall of the hollow tube 11 receives the display unit 20.

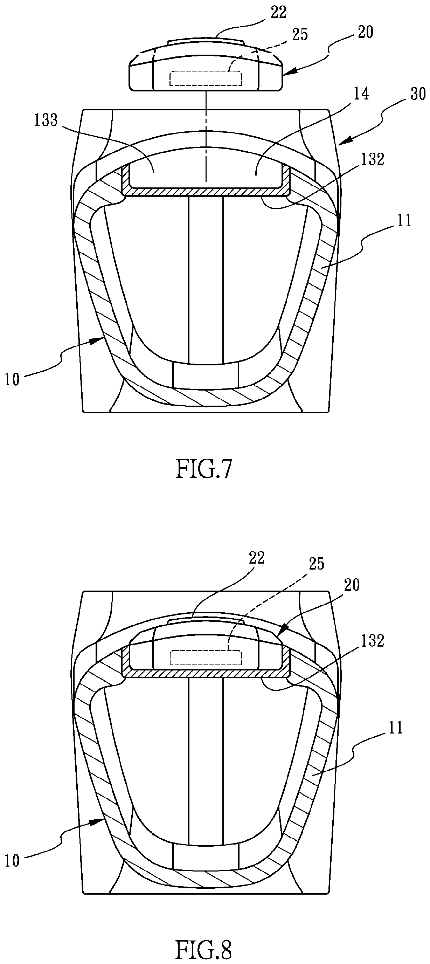

Figs. 7 and 8 disclose the third embodiment, the reinforcement portion 30 includes a solid reinforcement member 132 which is located in the slot 12 and connected between the two insides of the slot 12. The hardness of the material of the solid reinforcement member 13 is harder than that of the hollow tube 11. The reinforcement member 132 is a U-shaped member and located at the upper portion of the slot 12. A receiving space 133 is formed in the reinforcement member 132 to receive the display unit 20 therein.

While we have shown and described the embodiment in accordance with the present invention, it should be clear to those skilled in the art that further embodiments may be made without departing from the scope of the present invention as defined in the appended claims.

## Claims

1. A bicycle handlebar stem (10) which is adapted to be connected between a handlebar and a steering tube, the handlebar stem comprising:
a hollow tube (11) having a slot (12) defined therein, the hollow tube (11) having a reinforcement portion (30), a receiving space (14) defined between the reinforcement portion (30) and the hollow tube (11), and
a display unit (20) located in the receiving space (14) and having at least one Liquid Crystal Display screen (21), an operation button (22) and an enter button (23), the display unit (20) having a room (24) to receive a power source (25) therein, the display unit (20) protrudes beyond an outer surface of the hollow tube (11), **characterized in that**:
the reinforcement portion (30) includes a solid reinforcement member (13, 131, 132) which is either located transversely in the slot (12) and connected between two insides of the slot (12), or located in the slot (12) and integrally extends along two insides of the hollow tube (11).

2. The handlebar stem as claimed in claim 1, wherein the hardness of the solid reinforcement member (13, 131, 132) is harder than that of the hollow tube (11).

## Patentansprüche

1. Fahrradlenkervorbau (10), der geeignet ist, zwischen einer Griffstange und einem Gabelschaft angeschlossen zu werden, wobei der Lenkervorbau folgendes umfasst:
ein hohles Rohr (11) mit einem Schlitz (12), der darin ausgebildet ist, das hohle Rohr (11) umfasst ein Verstärkungsteil (30), wobei ein Aufnahmeraum (14) zwischen dem Verstärkungsteil (30) und dem hohlen Rohr (11) definiert ist, und
eine Anzeigeeinheit (20), die in dem Aufnahmeraum (14) (14) positioniert ist und mindestens einen Flüssigkristallanzeigeschirm (21), einen Betätigungsknopf (22) und eine Eingabetaste (23) umfasst, die Anzeigeeinheit (20) umfasst einen Raum (24) um eine Energiequelle (25) darin aufzunehmen, die Anzeigeeinheit (20) ragt über eine Außenfläche des hohlen Rohrs (11), **gekennzeichnet dadurch, dass**:
das Verstärkungsteil (30) ein festes Verstärkungselement (13, 131, 132) umfasst, das entweder quer in dem Schlitz (12) positioniert und zwischen zwei Innenseiten des Schlitzes (12) angeschlossen ist, oder es ist in dem Schlitz (12) positioniert und erstreckt sich vollständig entlang zwei Innenseiten des hohlen Rohrs (11).

2. Lenkervorbau nach Anspruch 1, wobei die Härte des festen Verstärkungselements (13, 131, 132) härter ist als die des hohlen Rohrs (11).

## Revendications

1. Potence de guidon de bicyclette (10) qui est apte à reliée entre un guidon et un tube de direction, la potence de guidon comprenant :
un tube creux (11) ayant une fente (12) définie dans celui-ci, le tube creux (11) ayant une partie de renfort (30), un espace de réception (14) défini entre la partie de renfort (30) et le tube creux (11), et
une unité d'affichage (20) située dans l'espace de réception (14) et ayant au moins un écran d'affichage à cristaux liquides (21), un bouton d'actionnement (22) et un bouton d'entrée (23), l'unité d'affichage (20) ayant une chambre (24) pour recevoir une source d'alimentation (25) à l'intérieur de celle-ci, l'unité d'affichage (20) fait saillie au-delà d'une surface externe du tube creux (11), **caractérisée par le fait que** :
la partie de renfort (30) comprend un élément de renfort plein (13, 131, 132) qui est soit situé transversalement dans la fente (12) et relié entre deux côtés intérieurs de la fente (12), soit est situé dans la fente (12) et s'étend d'un seul tenant le long de deux côtés intérieurs du tube creux (11).

2. Potence de guidon selon la revendication 1, dans laquelle la dureté de l'élément de renfort plein (13, 131, 132) est plus dure que celle du tube creux (11).
